# EUROPEAN PATENT APPLICATION

(11) **EP 3 154 170 A1**
(43) Date of publication of application: **12.04.2017**
(21) Application number: 15802570.0
(22) Date of filing: 08.05.2015
(51) Int. Cl.: H02K 9/19, B60K 7/00, B60K 17/12

(54) **IN-WHEEL MOTOR DRIVE DEVICE**

(30) Priority: 04.06.2014 JP 2014115845
(71) Applicant: NTN Corporation, Osaka-shi, Osaka 550-0003 (JP)
(72) Inventor: YUKISHIMA Ryou, Iwata-shi Shizuoka 438-8510 (JP); SUZUKI Minoru, Iwata-shi Shizuoka 438-8510 (JP); UOZUMI Tomohisa, Iwata-shi Shizuoka 438-8510 (JP)
(74) Representative: Grünecker Patent- und Rechtsanwälte PartG mbB
(86) International application number: PCT/JP2015/063295
(87) International publication number: WO 2015/186466

(57) **Abstract**

Provided is an in-wheel motor drive device (21) including: a motor part (A), a speed reducer part (B), a wheel bearing part (C), a casing (22), and a lubrication mechanism configured to supply lubricating oil to the motor part (A) and to the speed reducer part (B). A rotation shaft (24) of a motor in the motor part (A) is configured to drive an input shaft (25) of a speed reducer having eccentric portions (25a and 25b) to rotate. The speed reducer part (B) is configured to reduce a speed of rotation of the input shaft (25) of the speed reducer and transmit the rotation to an output shaft (28) of the speed reducer. The wheel bearing part (C) is connected to the output shaft (28) of the speed reducer. The motor part (A) includes a stator (23a) fixed to the casing (22) and a rotor (23b) arranged at the rotation shaft (24) of the motor. A shielding plate (70) configured to reduce stirring resistance of the lubricating oil generated by rotation of the rotor (23b) is arranged in the motor part (A).

## Description

### Technical Field

The present invention relates to an in-wheel motor drive device, in which, for example, an output shaft of an electric motor and a wheel bearing are connected to each other via a speed reducer.

### Background Art

There has been know a related-art in-wheel motor drive device having a structure described in, for example, Patent Literature 1. As illustrated in FIG. 11, an in-wheel motor drive device 101 described in Patent Literature 1 includes a motor part 103 configured to generate driving force inside a casing 102 to be mounted on a vehicle body via a suspension device (suspension), a wheel bearing part 104 to be connected to a wheel, and a speed reducer part 105 arranged between the motor part 103 and the wheel bearing part 104 and configured to reduce a speed of rotation of the motor part 103 to transmit the rotation to the wheel bearing part 104.

In the in-wheel motor drive device 101 having the above-mentioned configuration, a small-sized motor of a low-torque high-rotation type is employed in the motor part 103 from the viewpoint of device compactness. The motor part 103 is a radial gap motor including a stator 106 fixed to the casing 102, a rotor 107 arranged on a radially inner side of the stator 106 at an opposed position with a gap, and a rotation shaft 108 of the motor, which is arranged on a radially inner side of the rotor 107 to rotate integrally with the rotor 107.

Meanwhile, the wheel bearing part 104 requires a large torque for driving the wheel. Therefore, a cycloid speed reducer capable of obtaining a high speed reduction ratio with a compact size is employed in the speed reducer part 105. The cycloid speed reducer mainly includes an input shaft 110 of the speed reducer having a pair of eccentric portions 109a and 109b, a pair of curved plates 111a and 111b arranged at the eccentric portions 109a and 109b of the input shaft 110 of the speed reducer, respectively, a plurality of outer pins 112 configured to engage with outer peripheral surfaces of the curved plates 111a and 111b to cause rotational motion of the curved plates 111a and 111b, and a plurality of inner pins 114 configured to engage with inner peripheral surfaces of through-holes of the curved plates 111a and 111b to transmit the rotational motion of the curved plates 111a and 111b to an output shaft 113 of the speed reducer.

The in-wheel motor drive device 101 described in Patent Literature 1 includes a lubrication mechanism configured to supply lubricating oil to the motor part 103 and to the speed reducer part 105. The lubrication mechanism includes a rotary pump 115 configured to force-feed the lubricating oil, and has a structure to circulate the lubricating oil inside the motor part 103 and the speed reducer part 105. The lubrication mechanism configured to circulate the lubricating oil inside the motor part 103 from the rotary pump 115 mainly includes the rotary pump 115, an oil path 116 in an upper portion of the casing, an oil path 117 in the rotation shaft 108 of the motor, oil holes 118 in the rotor 107, an oil path 119 in a lower portion of the casing, an oil tank 120, and an oil path 121 in a lower portion of the casing. The outline arrows in the lubrication mechanism indicate lubricating oil flow.

In the lubrication mechanism having the above-mentioned configuration, when the rotary pump 115 rotates, the lubricating oil stored in the oil tank 120 is sucked through the oil path 121 in the lower portion of the casing into the rotary pump 115 and supplied to the inside of the motor part 103. The lubricating oil force-fed from the rotary pump 115 passes through the oil path 116 in the upper portion of the casing and the oil path 117 in the rotation shaft 108 of the motor and is discharged by pump pressure and centrifugal force through the oil holes 118 of the rotor 107 to cool the stator 106. After the stator 106 is cooled, the lubricating oil discharged through the oil holes 118 of the rotor 107 proceeds along an inner wall surface of the casing 102 and is discharged to the oil tank 120 through the oil path 119 in the lower portion of the casing.

### Citation List

Patent Literature 1: JP 2011-189919 A

### Summary of Invention

### Technical Problem

Incidentally, the related-art in-wheel motor drive device 101 described above needs to be accommodated inside a wheel of a vehicle and needs to reduce the unsprung weight. Further, downsizing is an essential requirement for providing a large passenger compartment space. Such downsizing of the in-wheel motor drive device itself may cause difficulty in securing enough volume for the oil tank 120 arranged in the lower portion of the casing 102. Thus, the lubricating oil is stored inside the motor part 103.

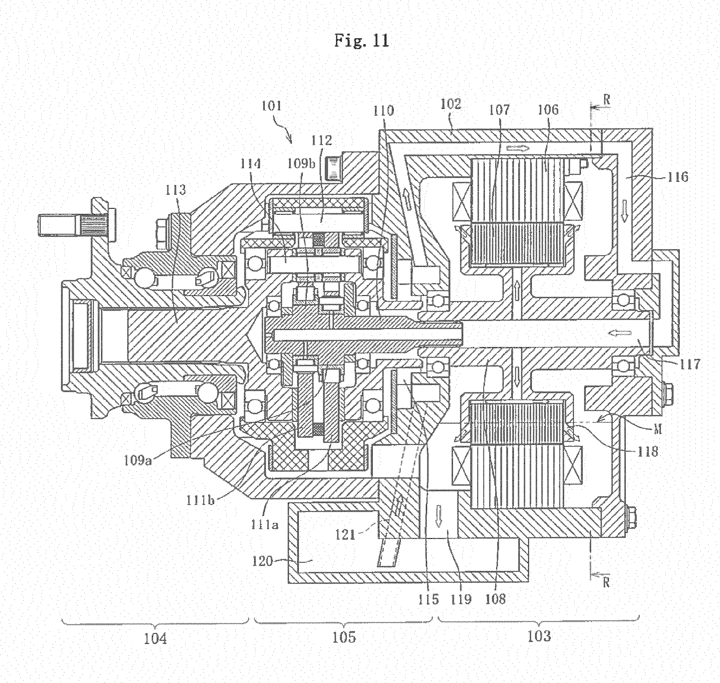

When the amount of lubricating oil to be enclosed is increased to secure a necessary amount of lubricating oil for the motor part 103 and the speed reducer part 105, as illustrated in FIG. 11, an oil surface M of the lubricating oil stored inside the motor part 103 becomes higher, with the result that the rotor 107 is partially immersed in the lubricating oil. Further, the rotary pump 115 rotates in synchronization with the output shaft 113 of the speed reducer. Thus, immediately after activation of the motor, the rotation speed of the rotary pump 115 increases with an increase in the motor rotation speed, and the amount of lubricating oil to be discharged from the rotary pump 115 also increases. Therefore, the amount of lubricating oil to be discharged through the oil holes 118 of the rotor 107 also increases.

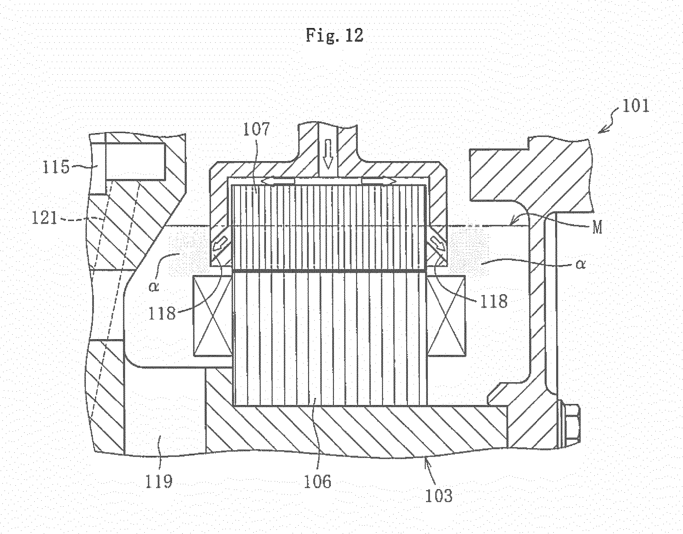

Further, the lubricating oil is fluid having viscosity, and the rotor 107 rotates at a high speed of 15,000 min⁻¹ or more. Therefore, as illustrated in FIG. 12, the lubricating oil brought into contact with the rotor 107 (lubricating oil in the mesh region α of FIG. 12) is dragged in a rotating direction of the rotor 107 and pulled upward. Further, when the rotation speed of the rotor 107 increases, the amount of lubricating oil brought into contact with the rotor 107 increases, and a load acting between the rotor 107 and the lubricating oil due to the viscosity of the lubricating oil also increases. Therefore, stirring resistance of the lubricating oil increases.

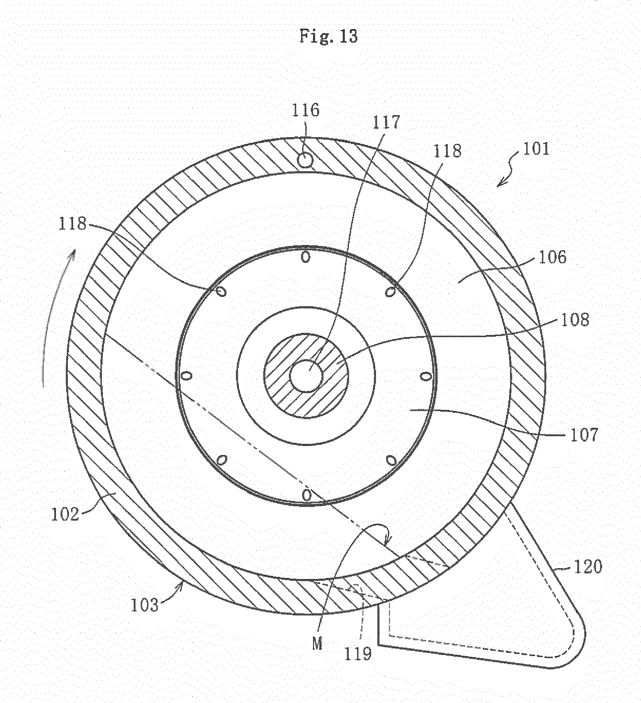

As illustrated in FIG. 13, an increase in stirring resistance may cause the lubricating oil stored inside the motor part 103 to be pulled upward in the rotating direction (see the solid line arrow of FIG. 13) of the rotor 107. As a result, the oil surface M is significantly inclined with respect to a horizontal plane. The oil tank 120 arranged in the lower portion of the casing 102 is arranged on a rear (close to the right side in FIG. 13) in a traveling direction of a vehicle to cope with a suspension configuration of the vehicle, an inclination of the lubricating oil due to inertia during acceleration and deceleration of the vehicle, and a change in the oil surface at the time of ascending a slope. Therefore, when the oil surface M of the lubricating oil is significantly inclined as described above, the lubricating oil becomes less likely to flow into the oil tank 120.

As described above, when the lubricating oil stored inside the motor part 103 becomes less likely to flow into the oil tank 120, the amount of lubricating oil in the oil tank 120 is reduced along with the rotation of the rotary pump 115. As a result, the amount of lubricating oil to be discharged from the rotary pump 115 is reduced, and hence the rotary pump 115 may be difficult to discharge the necessary amount of lubricating oil for the motor part 103 and the speed reducer part 105.

The present invention has been proposed in view of the above-mentioned problems. An object of the present invention is to provide an in-wheel motor drive device exhibiting high quality and excellent durability through improvement in lubricating performance in the motor part.

### Solution to Problem

According to one embodiment of the present invention, which has been devised to achieve the above-mentioned object, there is provided an in-wheel motor drive device, comprising: a motor part; a wheel bearing part; a casing; and a lubrication mechanism configured to supply lubricating oil to the motor part, the motor part comprising a stator fixed to the casing, a rotor arranged at the rotation shaft of a motor, and a shielding plate configured to reduce stirring resistance of the lubricating oil, which is generated by rotation of the rotor.

According to the present invention, dragging of the lubricating oil brought into contact with the rotor can be reduced by the shielding plate arranged in the motor part. Thus, the stirring resistance of the lubricating oil, which is generated by the rotation of the rotor, can be reduced. The reduction in stirring resistance of the lubricating oil in such a manner can also decrease the inclination of the oil surface of the lubricating oil stored inside the motor part. Thus, the lubricating oil stored inside the motor part becomes more likely to flow into the oil tank. Therefore, the amount of discharge of the rotary pump can be secured, and the lubricating performance of the motor part in the in-wheel motor drive device can be improved.

According to one embodiment of the present invention, it is preferred that the motor part comprise a rotor arranged on a radially inner side of the stator at an opposed position with a gap, and have oil holes formed on an in-board side and an out-board side of the rotor and configured to discharge the lubricating oil supplied by the lubrication mechanism, and that the shielding plate is fixed to the casing under a state of being arranged close to at least one of the oil holes of the rotor at an opposed position. With such a configuration, the amount of lubricating oil dragged by the rotation of the rotor is limited to the lubricating oil interposed between the rotor and the shielding plate. Therefore, dragging of the lubricating oil can easily be reduced. Herein, under a state in which the in-wheel motor drive device is assembled to the vehicle, a side close to an outer side of a vehicle is defined as an out-board side, and a side close to a center of the vehicle is defined as an in-board side.

According to one embodiment of the present invention, it is preferred that the shielding plate have a large number of small holes formed in a scattered dot pattern. With such a configuration, the lubricating oil present on the rotor side of the shielding plate becomes more likely to flow to the non-rotor side of the shielding plate through the small holes. Therefore, the stirring resistance of the lubricating oil can be further reduced.

According to one embodiment of the present invention, it is preferred that the shielding plate have a half-donut shape to be opposed to a lower half of the rotor. With such a configuration, the lubricating oil stored inside the motor part has an oil surface lower than a lower half of the rotor, and hence the shielding plate can be formed with a minimum size.

According to one embodiment of the present invention, it is preferred that the shielding plate be made of an insulating material. With such a configuration, the shielding plate can be arranged close to the stator.

According to one embodiment of the present invention, it is preferred that the lubrication mechanism comprise a pump configured to force-feed the lubricating oil and an oil tank. With such a configuration, the lubricating oil can easily be supplied to the motor part.

### Advantageous Effects of Invention

According to the present invention, dragging of the lubricating oil brought into contact with the rotor can be reduced by the shielding plate arranged in the motor part. Thus, the stirring resistance of the lubricating oil, which is generated by the rotation of the rotor, can be reduced. The reduction in stirring resistance of the lubricating oil in such a manner can also decrease the inclination of the oil surface of the lubricating oil stored inside the motor part. Thus, the lubricating oil stored inside the motor part becomes more likely to flow into the oil tank. Therefore, the amount of discharge of the rotary pump can be secured. As a result, the performance of the motor part in the in-wheel motor drive device can be improved, thereby being capable of achieving the in-wheel motor drive device exhibiting high quality and excellent durability.

### Brief Description of Drawings

FIG. 1 is a longitudinal sectional view for illustrating an overall configuration of an in-wheel motor drive device according to an embodiment of the present invention.
FIG. 2 is a sectional view taken along the line P-P of FIG. 1.
FIG. 3 is an enlarged sectional view for illustrating relevant parts of a speed reducer part of FIG. 1.
FIG. 4 is an explanatory view for illustrating a load acting on a curved plate of FIG. 1.
FIG. 5 is a transverse sectional view for illustrating a rotary pump of FIG. 1.
FIG. 6 is a view for illustrating a shielding plate of FIG. 1 as viewed from an axial direction.
FIG. 7 is an enlarged sectional view for illustrating relevant parts inside a motor part of FIG. 1.
FIG. 8 is a sectional view taken along the line Q-Q of FIG. 1.
FIG. 9 is a plan view for illustrating a schematic configuration of an electric vehicle on which in-wheel motor drive devices are mounted.
FIG. 10 is a rear sectional view for illustrating the electric vehicle of FIG. 9.
FIG. 11 is a longitudinal sectional view for illustrating an overall configuration of a related-art in-wheel motor drive device.
FIG. 12 is an enlarged sectional view for illustrating relevant parts inside a motor part of FIG. 11.
FIG. 13 is a sectional view taken along the line R-R of FIG. 11.

### Description of Embodiments

An in-wheel motor drive device according to one embodiment of the present invention is described in detail with reference to the drawings.

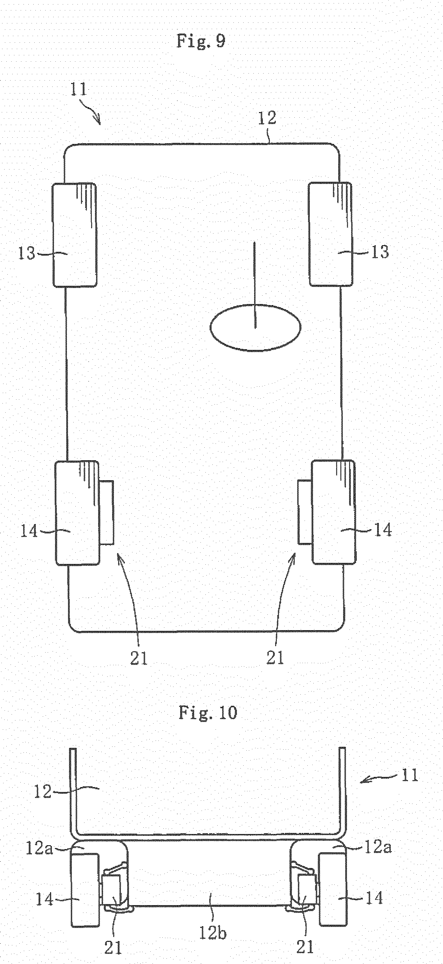

FIG. 9 is a schematic plan view of an electric vehicle 11 on which in-wheel motor drive devices 21 are mounted, and FIG. 10 is a schematic sectional view of the electric vehicle 11 as viewed from a rear side. As illustrated in FIG. 9, the electric vehicle 11 comprises a chassis 12, front wheels 13 serving as steered wheels, rear wheels 14 serving as driving wheels, and the in-wheel motor drive devices 21 configured to transmit driving force to the rear wheels 14. As illustrated in FIG. 10, each rear wheel 14 is accommodated inside a wheel housing 12a of the chassis 12 and fixed below the chassis 12 via a suspension device (suspension) 12b.

In the suspension device 12b, a horizontally extending suspension arm supports the rear wheels 14, and a strut comprising a coil spring and a shock absorber absorbs vibrations that each rear wheel 14 receives from the ground to suppress vibrations of the chassis 12. In addition, a stabilizer configured to suppress tilting of a vehicle body during turning and other operations is provided at connecting portions of the right and left suspension arms. In order to improve the property of following irregularities of a road surface to transmit the driving force of the rear wheels 14 to the road surface efficiently, the suspension device 12b is an independent suspension type capable of independently moving the right and left wheels up and down.

The electric vehicle 11 does not need to comprise amotor, a drive shaft, a differential gear mechanism, and other components on the chassis 12 because the in-wheel motor drive devices 21 configured to drive the right and left rear wheels 14, respectively, are arranged inside the wheel housings 12a. Accordingly, the electric vehicle 11 has the advantages in that a large passenger compartment space can be provided and that rotation of the right and left rear wheels 14 can be controlled, respectively. It is necessary to reduce the unsprung weight in order to improve traveling stability and NVH characteristics of the electric vehicle 11. In addition, the in-wheel motor drive device 21 is required to be downsized to provide a large passenger compartment space.

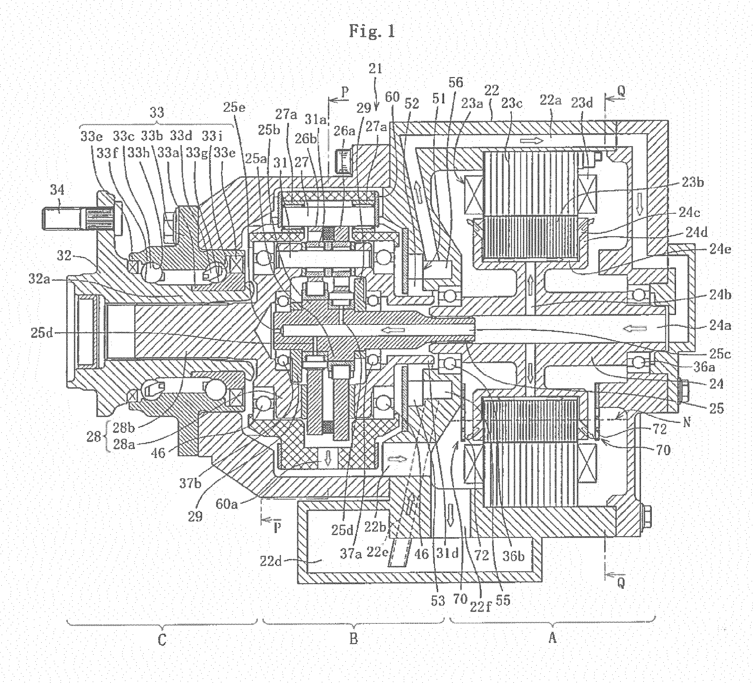

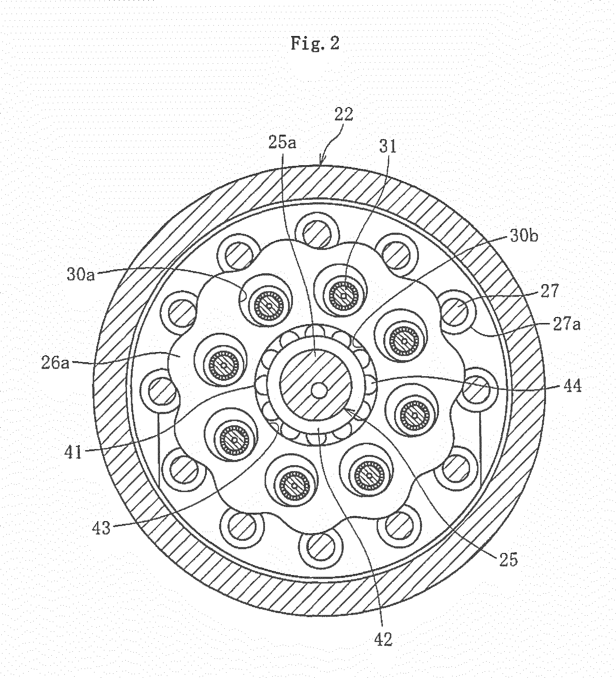

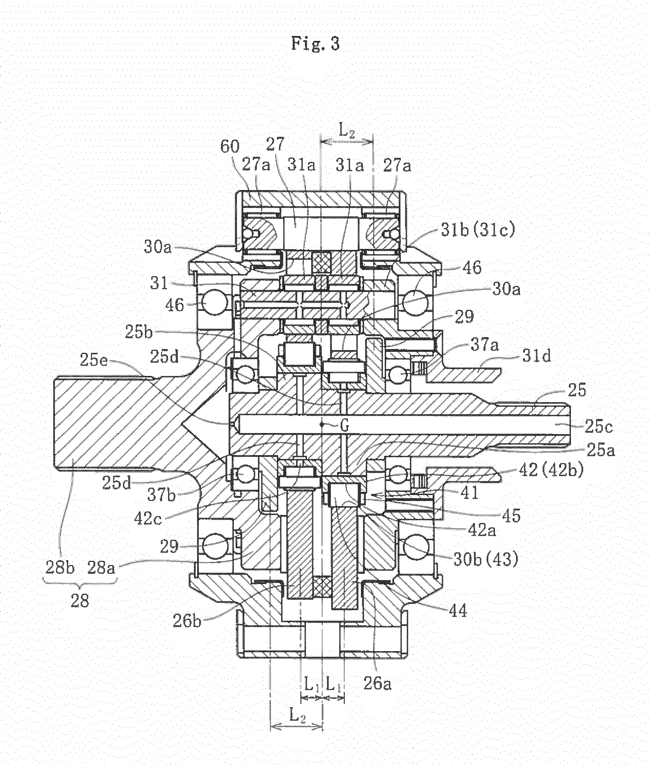

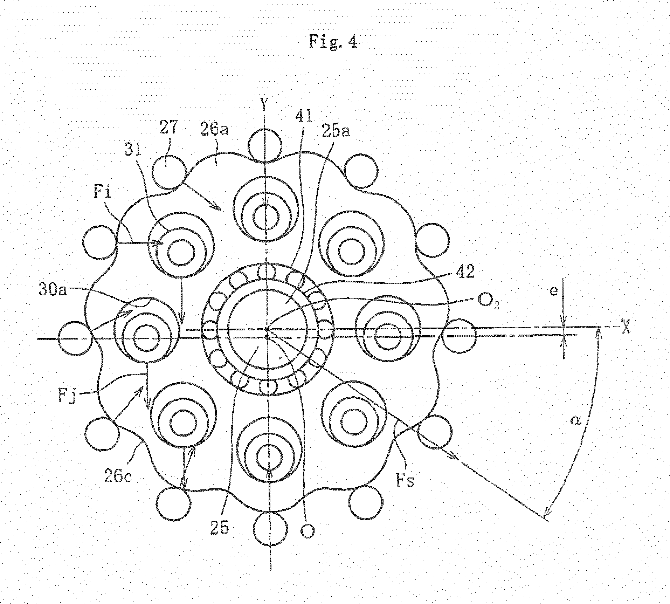

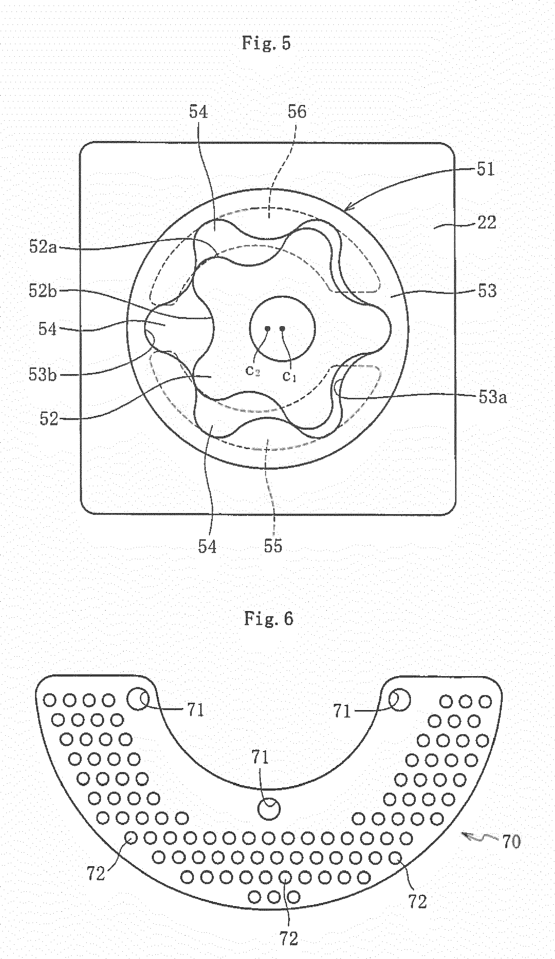

Therefore, the in-wheel motor drive device 21 of this embodiment has the following structure. FIG. 1 is a longitudinal sectional view for illustrating a schematic configuration of the in-wheel motor drive device 21. FIG. 2 is a sectional view taken along the line P-P of FIG. 1. FIG. 3 is an enlarged sectional view for illustrating of a speed reducer part B. FIG. 4 is an explanatory view for illustrating a load acting on a curved plate 26a. FIG. 5 is a transverse sectional view for illustrating a rotary pump 51. Prior to the description of a characteristic configuration of this embodiment, an overall configuration of the in-wheel motor drive device 21 is described.

As illustrated in FIG. 1, the in-wheel motor drive device 21 comprises a motor part A configured to generate driving force, the speed reducer part B configured to reduce a speed of rotation of the motor part A to output the rotation, and a wheel bearing part C configured to transmit the output from the speed reducer part B to the rear wheels 14 (see FIG. 9 and FIG. 10) serving as driving wheels. The motor part A and the speed reducer part B are accommodated in a casing 22 and mounted inside the wheel housing 12a (see FIG. 10) of the electric vehicle 11. The casing 22 has a divided structure constructed by a motor housing accommodating the motor part A and a speed reducer housing accommodating the speed reducer part B, and is unified through fastening with a bolt.

The motor part A is a radial gap motor comprising a stator 23a fixed to the casing 22, a rotor 23b arranged on a radially inner side of the stator 23a at an opposed position with a gap, and a rotation shaft 24 of the motor, which is arranged on a radially inner side of the rotor 23b so as to rotate integrally with the rotor 23b. The stator 23a is constructed by winding a coil 23d on an outer periphery of a magnetic core 23c, and the rotor 23b is constructed by a permanent magnet or a magnetic member. The rotor 23b rotates at a high speed of 15,000 min⁻¹ or more through energization with respect to the coil 23d of the stator 23a.

The rotation shaft 24 of the motor has a holder portion 24d, which integrally extends toward a radially outer side, to hold the rotor 23b. The holder portion 24d has a configuration with an annularly formed concave groove having the rotor 23b fitted and fixed therein. The rotation shaft 24 of the motor is rotatably supported by a rolling bearing 36a at one end portion in its axial direction (right side in FIG. 1) and by a rolling bearing 36b at another end portion in the axial direction (left side in FIG. 1) with respect to the casing 22.

An input shaft 25 of the speed reducer is rotatably supported by a rolling bearing 37a at one approximately central portion in its axial direction (right side in FIG. 1) and by a rolling bearing 37b at another end portion in the axial direction (left side in FIG. 1) with respect to an output shaft 28 of the speed reducer. The input shaft 25 of the speed reducer has eccentric portions 25a and 25b inside the speed reducer part B. The two eccentric portions 25a and 25b are arranged with a 180° phase shift to mutually cancel out centrifugal force caused by eccentric motion. The input shaft 25 of the speed reducer and the above-mentioned rotation shaft 24 of the motor are connected to each other by spline fitting, and driving force of the motor part A is transmitted to the speed reducer part B.

The speed reducer part B comprises curved plates 26a and 26b serving as revolving members rotatably held at the eccentric portions 25a and 25b of the input shaft 25 of the speed reducer, a pluralityof outer pins 27 configured to engage with outer peripheral portions of the curved plates 26a and 26b, a motion conversion mechanism configured to transmit rotational motion of the curved plates 26a and 26b to the output shaft 28 of the speed reducer, and a counterweight 29, which is arranged at the input shaft 25 of the speed reducer and adjacent to the eccentric portions 25a and 25b.

The output shaft 28 of the speed reducer comprises a flange portion 28a and a shaft portion 28b. A plurality of inner pins 31 are fixed to the flange portion 28a at equal intervals on a circumference about a rotation axis of the output shaft 28 of the speed reducer. Further, the shaft portion 28b is connected to a hub wheel 32 serving as an inner member of the wheel bearing part C by spline fitting so as to transmit torque, and is configured to transmit output of the speed reducer part B to the rear wheel 14. The output shaft 28 of the speed reducer is rotatably supported on an outer pin housing 60 by rolling bearings 46.

As illustrated in FIG. 2 and FIG. 3, the curved plates 26a and 26b have a plurality of wave patterns formed of trochoidal curves such as epitrochoidal curves in the outer peripheral portions, and through-holes 30a and 30b each extending from one end surface to another end surface. The plurality of through-holes 30a are formed at equal intervals on the circumference about the rotation axis of the curved plates 26a and 26b and are configured to receive the above-mentioned inner pins 31. The through-hole 30b is formed at a center of each of the curved plates 26a and 26b, and the eccentric portions 25a and 25b are fitted therein.

The curved plates 26a and 26b are rotatably supported by rolling bearings 41 with respect to the eccentric portions 25a and25b, respectively. The rolling bearing 41 is a cylindrical roller bearing comprising an inner ring 42 being fitted onto each of the outer peripheral surfaces of the eccentric portions 25a and 25b and having an inner raceway surface 42a formed on the outer peripheral surface, an outer raceway surface 43 directly formed at the inner peripheral surface of the through-hole 30b of each of the curved plates 26a and 26b, a plurality of cylindrical rollers 44 arranged between the inner raceway surface 42a and the outer raceway surface 43, and a cage 45 configured to retain the cylindrical rollers 44. The inner ring 42 has a flange portion 42b projecting toward a radially outer side from both ends of the inner raceway surface 42a in the axial direction.

The outer pins 27 are provided at equal intervals on the circumference about the rotation axis of the input shaft 25 of the speed reducer. As a result of revolving motion of the curved plates 26a and 26b, curved wave patterns are engaged with the outer pins 27 to cause rotational motion of the curved plates 26a and 26b. The outer pins 27 are held rotatably on the outer pin housing 60 by needle roller bearings 27a, and the outer pin housing 60 is mounted to the casing 22 under a floating state (not shown) of being rotationally stopped and elastically supported. With this, contact resistance between the outer pins 27 and the curved plate 26a and between the outer pins 27 and the curved plate 26b can be reduced.

The counterweight 29 has an approximately fan shape, has a through-hole into which the input shaft 25 of the speed reducer is fitted, and is arranged at a position adjacent to each of the eccentric portions 25a and 25b with a 180° phase shift with respect to the eccentric portions 25a and 25b in order to cancel out unbalanced inertia couple caused by the rotation of the curved plates 26a and 26b. When a central point in the rotation axis direction between the two curved plates 26a and 26b is denoted by G (see FIG. 3), a relationship of L₁×m₁×ε₁=L₂×m₂×ε₂ is satisfied on the right side of the central point G, where L₁ is the distance between the central point G and the center of the curved plate 26a, m₁ is the sum of the mass of the curved plate 26a, the mass of the rolling bearing 41, and the mass of the eccentric portion 25a, ε₁ is the amount of eccentricity of the center of gravity of the curved plate 26a from the rotation axis, L₂ is the distance between the central point G and the counterweight 29, m₂ is the mass of the counterweight 29, and ε₂ is the amount of eccentricity of the center of gravity of the counterweight 29 from the rotation axis. The relationship of L₁×m₁×ε₁=L₂×m₂×ε₂ allows for inevitably occurring errors. The same relationship is established between the curved plate 26b and the counterweight 29 on the left side of the central point G.

The motion conversion mechanism comprises the plurality of inner pins 31, which are held on the output shaft 28 of the speed reducer and extend in the axis direction, and the through-holes 30a formed in the curved plates 26a and 26b. The inner pins 31 are provided at equal intervals on the circumference about the rotation axis of the output shaft 28 of the speed reducer, and each have one end in the axial direction fixed to the flange 28a of the output shaft 28 of the speed reducer. In order to reduce the frictional resistance between the inner pins 31 and the curved plate 26a and between the inner pins 31 and the curved plate 26b, needle roller bearings 31a are provided at positions of contact with the inner wall surfaces of the through-holes 30a in the curved plates 26a and 26b. The through-holes 30a are arranged at positions corresponding to the plurality of inner pins 31, respectively, and an inner diameter of each through-hole 30a is set larger by a predetermined dimension than an outer diameter of each inner pin 31 (maximum diameter including the needle roller bearings 31a).

A stabilizer 31b is provided at other ends of the inner pins 31 in the axial direction. The stabilizer 31b comprises an annular portion 31c having a circular ring shape, and a cylindrical portion 31d extending in the axial direction from the inner peripheral surface of the annular portion 31c. The other ends of the plurality of inner pins 31 in the axial direction are fixed to the annular portion 31c. The load applied to some of the inner pins 31 from the curved plates 26a and 26b is supported by all the inner pins 31 through the flange 28a and the stabilizer 31b. Therefore, the stress acting on the inner pins 31 can be reduced, thereby being capable of improving the durability.

The state of the load acting on each of the curved plates 26a and 26b is described with reference to FIG. 4. An axial center O₂ of the eccentric portion 25a is eccentric with respect to an axial center O of the input shaft 25 of the speed reducer by an amount of eccentricity e. The curved plate 26a is mounted to the outer periphery of the eccentric portion 25a, and the eccentric portion 25a rotatably supports the curved plate 26a. Accordingly, the axial center O₂ is also an axial center of the curved plate 26a. The outer periphery of the curved plate 26a is formed of a wavy curve, and the curved plate 26a has radially concave and wavy recesses 26c equiangularly. On the periphery of the curved plate 26a, the plurality of outer pins 27 configured to engage with the recesses 26c are arranged in the circumferential direction about the axial center O.

In FIG. 4, when the eccentric portion 25a rotates in a counterclockwise direction on the drawing sheet together with the input shaft 25 of the speed reducer, the eccentric portion 25a revolves about the axial center O. Therefore, the recesses 26c of the curved plate 26a successively come into circumferential contact with the outer pins 27. As a result, as indicated by the arrows, the curved plate 26a is subjected to a load Fi from each of the plurality of outer pins 27 to rotate in a clockwise direction.

The curved plate 26a has the plurality of through-holes 30a formed in the circumferential direction about the axial center O₂. The inner pin 31 configured to be joined to the output shaft 28 of the speed reducer, which is arranged coaxially with the axial center O, is inserted through each through-hole 30a. The inner diameter of each through-hole 30a is larger by a predetermined dimension than the outer diameter of each inner pin 31, and hence the inner pins 31 do not impede the revolving motion of the curved plate 26a, and the inner pins 31 utilize the rotational motion of the curved plate 26a to allow the output shaft 28 of the speed reducer to rotate. Then, the output shaft 28 of the speed reducer has a higher torque and a lower number of rotations than the input shaft 25 of the speed reducer, and the curved plate 26a is subjected to a load Fj from each of the plurality of inner pins 31, as indicated by the arrows in FIG. 4. A resultant force Fs of the plurality of loads Fi and Fj is applied to the input shaft 25 of the speed reducer.

The direction of the resultant force Fs varies depending on the geometric conditions such as the wavy shape of the curved plate 26a and the number of the recesses 26c, and on the effect of centrifugal force. Specifically, an angle α formed between the resultant force Fs and a reference line X that is orthogonal to a straight line Y connecting the rotation axial center O₂ and the axial center O and passes through the axial center O₂ varies within a range of from approximately 30° to approximately 60°. The plurality of loads Fi and Fj vary in load direction and load magnitude during one rotation (360°) of the input shaft 25 of the speed reducer. As a result, the resultant force Fs acting on the input shaft 25 of the speed reducer also varies in load direction and load magnitude. One rotation of the input shaft 25 of the speed reducer in the counterclockwise direction causes speed reduction of the wavy recesses 26c of the curved plate 26a and rotation of the curved plate 26a by one pitch in the clockwise direction, resulting in the state of FIG. 4. This process is repeated.

As illustrated in FIG. 1, a bearing 33 for the wheel in the wheel bearing part C is a double-row angular contact ball bearing comprising an inner member, an outer wheel 33b, a plurality of balls 33c, a cage 33d, and sealing members 33e. The inner member is constructed by the hub wheel 32 having an inner raceway surface 33f directly formed on an outer peripheral surface thereof, and an inner ring 33a which is fitted over a small-diameter step portion 32a of the outer peripheral surface of the hub wheel 32 and has an inner raceway surface 33g formed on an outer peripheral surface of the inner ring 33a. The outer wheel 33b is fitted and fixed to an inner peripheral surface of the casing 22, and has outer raceway surfaces 33h and 33i formed on an inner peripheral surface thereof. The plurality of balls 33c serve as rolling elements arranged between the inner raceway surface 33f of the hub wheel 32 and the outer raceway surface 33h of the outer wheel 33b, and between the inner raceway surface 33g of the inner ring 33a and the outer raceway surface 33i of the outer wheel 33b. The cage 33d is configured to hold a space between the adjacent balls 33c. The sealing members 33e are configured to seal the bearing 33 for the wheel from both ends in the axial direction. The rear wheel 14 is connected and fixed to the hub wheel 32 of the bearing 33 for the wheel by a bolt 34.

Next, the entire lubrication mechanism is described. The lubrication mechanism is configured to supply lubricating oil to the motor part A to cool the motor part A, and is configured to supply the lubricating oil to the speed reducer part B. As illustrated in FIG. 1, the lubrication mechanism mainly comprises the rotary pump 51, oil paths 22a, 24a, and 24b and oil holes 24c formed in the motor part A, an oil path 25c and oil holes 25d and 25e formed in the speed reducer part B, and an oil tank 22d arranged in a lower portion of the casing 22. A suction port 55 and a discharge port 56 of the above-mentioned rotary pump 51 are formed in the motor housing of the casing 22. Further, the oil tank 22d is formed integrally with the motor housing of the casing 22.

The oil path 22a formed in the casing 22 extends from the rotary pump 51 toward a radially outer side and is bent to extend in the axial direction. The oil path 22a is further bent to extend toward a radially inner side to be connected to the oil path 24a. The oil path 24a extends inside the rotation shaft 24 of the motor along the axial direction to be connected to the oil path 25c. The oil paths 24b of the rotation shaft 24 of the motor communicate with the oil path 24a extending along the axial direction, and extend to the holder portion 24d located on the radially outer side to communicate with a gap 24e formed between the holder portion 24d and the rotor 23b. The oil holes 24c are formed in end surfaces of the holder portion 24d on an in-board side and an out-board side and communicate with the gap 24e between the holder portion 24d and the rotor 23b to be open to the inside of the motor part A.

The oil path 25c extends inside the input shaft 25 of the speed reducer along the axial direction. The oil holes 25d communicate with the oil path 25c extending along the axial direction, and extend toward the outer peripheral surface of the input shaft 25 of the speed reducer to be open to the inside of the speed reducer part B. The oil hole 25e communicates with the oil path 25c extending along the axial direction, and is open to the inside of the speed reducer part B from an axial end of the input shaft 25 of the speed reducer.

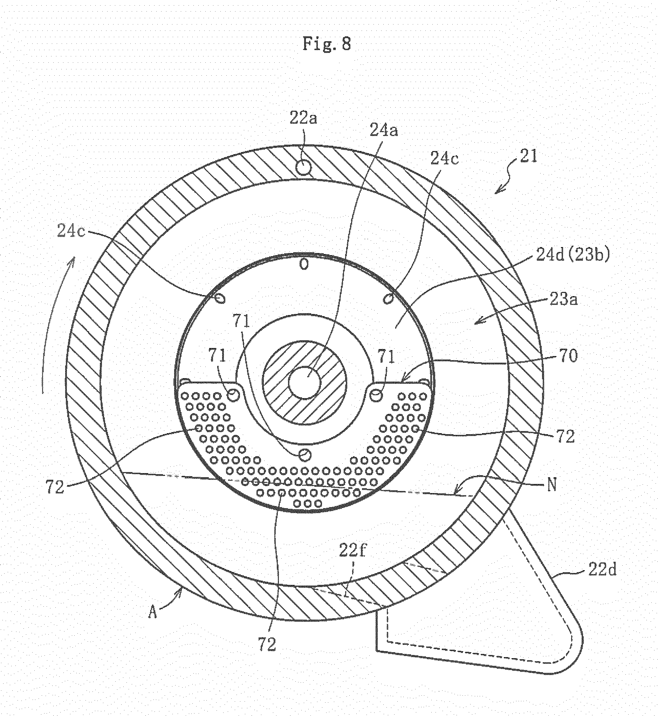

Between the motor part A and the speed reducer part B of the casing 22, there is formed an oil path 22b which communicates with the inside of the motor part A and the inside of the speed reducer part B. In a bottom portion of the casing 22 at a position of the motor part A, there is formed an oil path 22f configured to discharge the lubricating oil inside the motor part A to the oil tank 22d. The oil tank 22d is arranged at a lower position of the casing 22 on a rear (close to the right side in FIG. 8) in a traveling direction of a vehicle to cope with a suspension configuration of the vehicle, an inclination of the lubricating oil due to inertia during acceleration and deceleration of the vehicle, and a change in the oil surface at the time of ascending a slope. Further, the casing 22 has an oil path 22e configured to return the lubricating oil from the oil tank 22d to the rotary pump 51. The rotary pump 51 configured to forcibly circulate the lubricating oil is arranged between the oil path 22e and the oil path 22a of the casing 22.

As illustrated in FIG. 5, the rotary pump 51 is a cycloid pump comprising an inner rotor 52 configured to rotate using the rotation of the output shaft 28 of the speed reducer (see FIG. 1), an outer rotor 53 configured to be driven to rotate in conjunction with the rotation of the inner rotor 52, pump chambers 54, the suction port 55 communicating with the oil path 22e, and the discharge port 56 communicating with the oil path 22a. An increase in size of the in-wheel motor drive device 21 can be prevented by arranging the rotary pump 51 inside the casing 22.

The outer peripheral surface of the inner rotor 52 has a tooth profile formed of cycloid curves. To be more specific, each tooth tip portion 52a has an epicycloid curve shape, and each tooth groove portion 52b has a hypocycloid curve shape. The inner rotor 52 is fitted to the outer peripheral surface of the cylindrical portion 31d (see FIG. 1 and FIG. 3) provided to the stabilizer 31b to rotate integrally with the output shaft 28 of the speed reducer. The inner peripheral surface of the outer rotor 53 has a tooth profile formed of cycloid curves. To be more specific, each tooth tip portion 53a has a hypocycloid curve shape, and each tooth groove portion 53b has an epicycloid curve shape. The outer rotor 53 is rotatably supported in the casing 22.

The inner rotor 52 rotates about a rotation center C₁, whereas the outer rotor 53 rotates about a rotation center C₂. The inner rotor 52 and the outer rotor 53 rotate about the different rotation centers C₁ and C₂, and hence the volume of each pump chamber 54 changes continuously. Thus, the lubricating oil flowing through the suction port 55 is force-fed through the discharge port 56 to the oil path 22a.

A flow of the lubricating oil with the lubrication mechanism having the above-mentioned configuration is described. In FIG. 1, the outline arrows in the lubrication mechanism indicate the flow of the lubricating oil. To cool the motor part A, the lubricating oil force-fed from the rotary pump 51 flows through the oil paths 22a and 24a, and partially passes through the oil path 24b and the gap 24e by centrifugal force caused by rotation of the rotation shaft 24 of the motor and by pump pressure, thereby cooling the rotor 23b. Further, the lubricating oil is discharged through the oil holes 24c of the holder portion 24d, thereby cooling the stator 23a. The motor part A is cooled in such a manner.

Meanwhile, to lubricate the speed reducer part B, the lubricating oil force-fed from the rotary pump 51 passes through the oil paths 22a, 24a, and 25c, and is partially discharged through the oil holes 25d and 25e to the speed reducer part B by centrifugal force caused by rotation of the input shaft 25 of the speed reducer and pump pressure. The lubricating oil having been discharged through the oil holes 25d is supplied through oil holes 42c (see FIG. 3), which are formed in the inner rings 42 of the cylindrical rolling bearings 41 configured to support the curved plates 26a and 26b, to the inside of the bearing. Further, the lubricating oil moves to the radially outer side through an oil path 60a formed in the outer pin housing 60 while lubricating abutment portions of the curved plates 26a and 26b with the inner pins 31 and the outer pins 27. The lubricating oil discharged through the oil holes 25e is supplied to, for example, the rolling bearing 37b configured to support the input shaft 25 of the speed reducer. The speed reducer part B is lubricated in such a manner.

The lubricating oil having cooled the motor part A and lubricated the speed reducer part B moves to a lower portion along the inner wall surface of the casing 22 by the gravity. The lubricating oil having moved to the lower portion of the speed reducer part B moves to the motor part A through the oil path 22b. Further, the lubricating oil having moved to the lower portion of the motor part A, together with the lubricating oil from the speed reducer part B, is discharged through the oil path 22f and temporarily stored in the oil tank 22d. As described above, the oil tank 22d is arranged, and hence the lubricating oil which cannot temporarily be discharged by the rotary pump 51 can be stored in the oil tank 22d. As a result, an increase in torque loss of the speed reducer part B can be prevented.

The overall configuration of the in-wheel motor drive device 21 of this embodiment is as described above. Characteristic configurations thereof are described below.

With regard to the in-wheel motor drive device 21 of this embodiment, it has been conceived to provide a shielding plate 70, which is configured to reduce stirring resistance of the lubricating oil generated by rotation of the rotor 23b, to the motor part A. As illustrated in FIG. 6, the shielding plate 70 has a half-donut shape. There are formed mounting holes 71 in an inner peripheral portion and a large number of small holes 72 in an entire surface excluding the mounting parts in a scattered dot pattern.

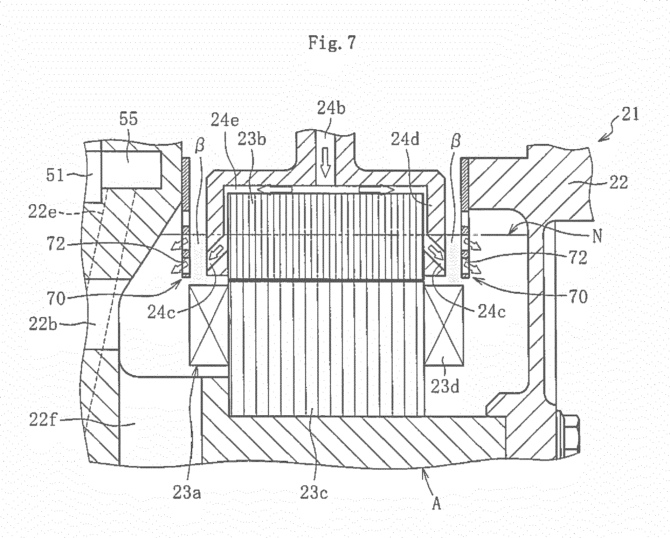

As illustrated in FIG. 7 and FIG. 8, the shielding plate 70 is fixed to the inner wall surface of the casing 22 by screws utilizing the mounting holes 71 formed in the inner peripheral portion of the shielding plate 70. Through this mounting, the shielding plate 70 is arranged close to the lower half of the rotor 23b so as to be opposed to the oil holes 24c of the holder portion 24d. A material of this shielding plate 70 may be a metal having a nonmagnetic property or a resin having an insulating property.

Further, in this embodiment, two shielding plates 70 are arranged on both the in-board side and out-board side of the holder portion 24d of the rotor 23b. However, one shielding plate 70 may be arranged on any one of the in-board side and out-board side.

The in-wheel motor drive device 21 needs to be accommodated inside a wheel of a vehicle and needs to reduce the unsprung weight. Further, downsizing is an essential requirement for providing a large passenger compartment space. Such downsizing of the in-wheel motor drive device itself may cause difficulty in securing enough volume for the oil tank 22d arranged in the lower portion of the casing 22. Thus, the lubricating oil is stored inside the motor part A.

When the amount of the lubricating oil to be enclosed is increased to secure a necessary amount of the lubricating oil for the motor part A and the speed reducer part B, as illustrated in FIG. 1, an oil surface N of the lubricating oil stored inside the motor part A becomes higher, with the result that the rotor 23b is partially immersed in the lubricating oil. Further, the rotary pump 51 rotates in synchronization with the output shaft 28 of the speed reducer. Thus, immediately after activation of the motor, the rotation speed of the rotary pump 51 increases with an increase in the motor rotation speed, and the amount of lubricating oil to be discharged from the rotary pump 51 also increases. Therefore, the amount of lubricating oil to be discharged through the oil holes 24c of the holder portion 24d of the rotor 23b also increases.

Further, the lubricating oil is fluid having viscosity, and the rotor 23b rotates at a high speed of 15,000 min⁻¹ or more. Therefore, the lubricating oil brought into contact with the holder portion 24d of the rotor 23b is dragged in a rotating direction of the rotor 23b and pulled upward. According to the in-wheel motor drive device 21 of this embodiment, the shielding plate 70 is arranged close to the holder portion 24d of the rotor 23b. Thus, the amount of lubricating oil dragged by the rotation of the rotor 23b is limited to the lubricating oil interposed between the holder portion 24d of the rotor 23b and the shielding plate 70 (lubricating oil in the mesh region β of FIG. 7) to be less than the case of the related-art in-wheel motor drive device 101 (see FIG. 12). Therefore, dragging of the lubricating oil can be reduced.

As described above, dragging of the lubricating oil can be reduced, and hence the stirring resistance of the lubricating oil generated by the rotation of the rotor 23b can be reduced. The stirring resistance of the lubricating oil is reduced, and hence, as illustrated in FIG. 8, even when the lubricating oil stored inside the motor part A is pulled in the rotating direction of the rotor 23b (direction of the solid line arrow in FIG. 8), an inclination of the oil surface N of the lubricating oil may be smaller than the case of the related-art in-wheel motor drive device 101 (see FIG. 13). As a result, even when the oil tank 22d is arranged on a rear in the traveling direction of a vehicle (close to the right side in FIG. 8), the lubricating oil becomes more likely to flow into the oil tank 22d. The amount of discharge of the rotary pump 51 can be secured by sufficiently securing the amount of lubricating oil in the oil tank 22d. Therefore, the lubricating performance of the motor part A in the in-wheel motor drive device 21 can be improved.

The shielding plate 70 of this embodiment has a large number of small holes 72 formed in a scattered dot pattern. Thus, as illustrated in FIG. 7, the lubricating oil having been discharged through the oil holes 24c of the holder portion 24d of the rotor 23b and being present on the rotor side of the shielding plate 70 becomes more likely to flow through the small holes 72 into the motor part A arranged on the non-rotor side of the shielding plate 70. As a result, an increase in the amount of lubricating oil interposed between the holder portion 24d of the rotor 23b and the shielding plate 70 is prevented. Therefore, it contributes to the reduction of dragging of the lubricating oil and to the reduction of the stirring resistance.

Further, the lubricating oil stored inside the motor part A has the oil surface N which is at a level lower than the lower half of the rotor 23b. Therefore, the shielding plate 70 can be constructed with a minimum size by forming the shielding plate 70 to have a half-donut shape opposed to the lower half of the rotor 23b.

When the shielding plate 70 is to be arranged close to the holder portion 24d of the rotor 23d in the axial direction, the axial oscillation of the rotor 23b rotating at high speed needs to be taken into account. The axial gap between the holder portion 24d of the rotor 23b and the shielding plate 70 is only necessary to be set to the extent that interference with the rotor 23b due to the axial oscillation of the rotor 23b can be avoided.

Further, the outer peripheral portion of the shielding plate 70 is arranged also close to the coil 23d of the stator 23a. When a nonmagnetic metal is used as a material of the shielding plate 70, the radial gap with the coil 23d of the stator 23a needs to be set to a minimum size preventing a flow of current to the shielding plate 70. Therefore, use of a resin having an insulating property as the material of the shielding plate 70 is effective. When the shielding plate 70 is made of a resin, the shielding plate 70 can easily be arranged close to the coil 23d of the stator 23a, and hence the lubricating oil interposed between the holder portion 24d of the rotor 23b and the shielding plate 70 can be securely limited.

Lastly, the overall operation principle of the in-wheel motor drive device 21 of this embodiment is described.

As illustrated in FIG. 1 to FIG. 3, in the motor part A, for example, the coil of the stator 23a is supplied with AC current to generate electromagnetic force, which in turn allows the rotor 23b formed of a permanent magnet or a magnetic member to rotate. The input shaft 25 of the speed reducer, which is connected to the rotation shaft 24 of the motor, therefore rotates to cause the curved plates 26a and 26b to revolve about the rotation axis of the input shaft 25 of the speed reducer. Then, the outer pins 27 come into engagement with the curved wave patterns of the curved plates 26a and 26b to allow the curved plates 26a and 26b to rotate on their axes in a direction reverse to the rotation of the input shaft 25 of the speed reducer.

The inner pins 31 inserted through the through-holes 30a come into contact with the inner wall surfaces of the through-holes 30a in conjunction with the rotational motion of the curved plates 26a and 26b. The revolving motion of the curved plates 26a and 26b is therefore prevented from being transmitted to the inner pins 31, and only the rotational motion of the curved plates 26a and 26b is transmitted to the wheel bearing part C through the output shaft 28 of the speed reducer. In this process, the speed of the rotation of the input shaft 25 of the speed reducer is reduced by the speed reducer part B, and the rotation is transmitted to the output shaft 28 of the speed reducer. Therefore, a necessary torque can be transmitted to the rear wheels 14 even in a case where the motor part A of a low-torque high-rotation type is employed.

When the number of the outer pins 27 and the number of wave patterns of the curved plates 26a and 26b are denoted by Z_{A} and Z_{B}, respectively, the speed reduction ratio in the speed reducer part B is calculated by (Z_{A}-Z_{B})/Z_{B}. In the embodiment illustrated in FIG. 2, Z_{A}=12 and Z_{B}=11 are given. Thus, a very high speed reduction ratio of 1/11 can be obtained. The in-wheel motor drive device 21 that is compact and has a high speed reduction ratio can be obtained by using the speed reducer part B capable of obtaining a high speed reduction ratio without requiring a multi-stage configuration. Moreover, the needle roller bearings 27a and 31a are provided to the outer pins 27 and the inner pins 31, respectively (see FIG. 3), to reduce the frictional resistance between those pins and the curved plates 26a and 26b, thereby improving the transmission efficiency of the speed reducer part B.

In this embodiment, there has been exemplified a case where the oil path 24b is formed in the rotation shaft 24 of the motor, the oil hole 25d is formed in each of the eccentric portions 25a and 25b, and the oil hole 25e is formed in the axial end of the input shaft 25 of the speed reducer. The present invention is not limited thereto, and the oil paths and holes may be formed at any positions in the rotation shaft 24 of the motor and the input shaft 25 of the speed reducer. Further, there has been given an example in which a cycloid pump is used as the rotary pump 51, but the present invention is not limited thereto. Any rotary pump that is driven using the rotation of the output shaft 28 of the speed reducer may be employed. Further, the rotary pump 51 may be omitted so that the lubricating oil is circulated only by centrifugal force.

There has been given an example in which the two curved plates 26a and 26b of the speed reducer part B are arranged with a 180° phase shift. However, the number of curved plates may be arbitrarily set. In a case where three curved plates are arranged, for example, the three curved plates may be arranged with a 120° phase shift. There has been given an example in which the motion conversion mechanism comprises the inner pins 31 fixed to the output shaft 28 of the speed reducer and the through-holes 30a formed in the curved plates 26a and 26b. However, the present invention is not limited thereto. Any configuration may be applied as long as the rotation of the speed reducer part B can be transmitted to the hub wheel 32. For example, the motion conversion mechanism may comprise inner pins fixed to the curved plates 26a and 26b and holes formed in the output shaft 28 of the speed reducer. With regard to the in-wheel motor drive device 21 of this embodiment, there has been given an example in which the speed reducer of the cycloid type is employed. However, the present invention is not limited thereto. A planetary speed reducer, a parallel shaft speed reducer, and other speed reducers are applicable. Further, it may be of so-called direct motor type not employing a speed reducer.

The description as to the operation in this embodiment focuses on the rotation of each member. In fact, however, power containing a torque is transmitted from the motor part A to the rear wheels 14. Accordingly, the power after speed reduction as described above is converted into a high torque. There has been given a case where electric power is supplied to the motor part A to drive the motor part and the power from the motor part A is transmitted to the rear wheels 14. Contrary to this, however, when a vehicle decelerates or descends a slope, power from the rear wheel 14 side may be converted at the speed reducer part B into high-rotation low-torque rotation so that the rotation is transmitted to the motor part A for electric power generation in the motor part A. Further, the electric power generated in the motor part A may be stored in a battery so that the electric power is used to drive the motor part A later or to operate other electric devices provided in the vehicle.

In this embodiment, there has been given an example in which a radial gap motor is employed in the motor part A. However, the present invention is not limited thereto, and a motor having arbitrary configuration is applicable. For example, there may be used an axial gap motor comprising a stator to be fixed to a casing, and a rotor arranged on the inner side of the stator at an opposed position with an axial gap. In addition, there has been given an example in which the rear wheels 14 of the electric vehicle 11 illustrated in FIG. 9 and FIG. 10 serve as driving wheels. However, the present invention is not limited thereto, and the front wheels 13 may be used as driving wheels or a four-wheel drive vehicle may be used. It should be understood that "electric vehicle" as used herein is a concept encompassing all vehicles that may obtain driving force from electric power and also encompasses, for example, a hybrid car.

The present invention is not limited to the above-mentioned embodiment. As a matter of course, the present invention may be carried out in various modes without departing from the gist of the present invention. The scope of the present invention is defined in the scope of claims, and encompasses equivalents described in claims and all changes within the scope of claims.

## Claims

1. An in-wheel motor drive device, comprising:
a motor part;
a wheel bearing part;
a casing; and
a lubrication mechanism configured to supply lubricating oil to the motor part,
the motor part comprising a stator fixed to the casing, a rotor arranged at a rotation shaft of a motor, and a shielding plate configured to reduce stirring resistance of the lubricating oil, which is generated by rotation of the rotor.

2. The in-wheel motor drive device according to claim 1, wherein the motor part comprises a rotor arranged on a radially inner side of the stator at an opposed position with a gap, and has oil holes formed on an in-board side and an out-board side of the rotor and configured to discharge the lubricating oil supplied by the lubrication mechanism, and
wherein the shielding plate is fixed to the casing under a state of being arranged close to at least one of the oil holes of the rotor at an opposed position.

3. The in-wheel motor drive device according to claim 1 or 2, wherein the shielding plate has a large number of small holes formed in a scattered dot pattern.

4. The in-wheel motor drive device according to any one of claims 1 to 3, wherein the shielding plate has a half-donut shape to be opposed to a lower half of the rotor.

5. The in-wheel motor drive device according to any one of claims 1 to 4, wherein the shielding plate is made of an insulating material.

6. The in-wheel motor drive device according to any one of claims 1 to 5, wherein the lubrication mechanism comprises a pump configured to force-feed the lubricating oil and an oil tank.
